Europäisches Patentamt

European Patent Office

Office européen des brevets

(19)

(11) Publication number: **0 013 972**
**A1**

(12) # EUROPEAN PATENT APPLICATION

(21) Application number: 80100310.4

(22) Date of filing: 22.01.80

(51) Int. Cl.³: **G 02 B 5/14**

(30) Priority: 22.01.79 US 5616

(43) Date of publication of application: 06.08.80
Bulletin 80/16

(84) Designated Contracting States: **DE FR**

(71) Applicant: **Rockwell International Corporation, 2230 East Imperial Highway, El Segundo, California 90245 (US)**

(72) Inventor: **James, Kenneth Allan, 320 Iris Avenue, Corona Del Mar, CA 92625 (US)**
Inventor: **Quick, William Henry, 1818 Kanola Road, LaHabra Heights, CA 90631 (US)**
Inventor: **Strahan, Virgil Haskell, 2519 Dorothy Drive, Orange, CA 92619 (US)**

(74) Representative: **Wagner, Karl H., P.O. Box 246 Gewuerzmuehlstrasse 5, D-8000 München 22 (DE)**

(54) **Tapered mixing rod for a fiber optical multi-port coupler.**

(57) An apparatus for improved efficiency coupling of optical energy is disclosed. Coupling of the optical energy from one or more input fiber optic cables (30, 32) to a larger number of output fiber optic cables (34) is accomplished by means of a mixing rod (28) having input and output cross-sectional areas substantially matched to the input and output coupled fiber groups, respectively, and having appropriate tapering of the rod crosssection therebetween.

As a result of tapering the mixing rod, the coupler provides gradual reflection angle reduction that permits retention of the transmission system numerical aperture despite random refractive bending due to surface imperfections at the mixing rod/fiber coupling junction. In addition, an input coupling junction of prior art straight mixing rod couplers is obviated in the tapered mixing rod coupler, thereby eliminating a source of undesirable coupling loss.

# BACKGROUND OF THE INVENTION

1. Field of the Invention.

This invention relates generally to the art of fiber optic transmission lines and more specifically to a novel means for coupling the light energy from one or more fiber optic cables to a larger number of fiber optic cables, but with improved operating efficiency and reduced energy losses as compared to prior art fiber optic couplers.

2. Description of the Prior Art.

The use of couplers, also known as power splitters, is well known in a large number of energy transmission systems. For example, waveguide and coaxial couplers are well known in the microwave communications industry as a means of splitting the power available at one point in the communications line into a selected number of multiple power levels for transmission to a plurality of terminal ports. With the relatively recent advent of fiber optic communications systems for a variety of purposes including telephone communications, and other communication systems with broad bandwidth and insensitivity to electromagnetic interference, a need has arisen for means for coupling or splitting the transmitted light energy just as that need exists in the microwave communications field. In both the microwave and optical power transmission systems, the process of coupling the energy from at least one input line to a larger number of output lines, results in a reduction in the coupled energy available at each output line. This energy reduction is due to two different phenomena. One such phenomenon is the inherent energy reduction due to the ratio of division between the number of input lines, usually one, and the larger number of output lines.

As long as the coupler is a passive device and not a more costly active coupler that utilizes amplification, the coupling loss, per se, is unavoidable and is usually designed into the system so that the power level in the output-coupled ports is still sufficient to serve the minimum power requirements of the system. However, coupling loss also occurs as a result of inadvertent reflections at the coupling junctions, the inadvertent conversion of the energy into other forms of energy that are not useable in the system, and other similar phenomena that produce inadvertent losses that the designer attempts to reduce to a minimum in order to provide a coupling efficiency that is as high as possible.

In the fiber optics art there are a number of well known means for coupling light energy from one or more input fibers to a larger number of output fibers. One such coupler of the prior art is known as a mixing rod coupler in which a rod, usually made of the same material as that of the fiber and having a cross-sectional diameter equal to the group of output fibers, is utilized as a means of dispersing the input light energy from at least one fiber to a plurality of output fibers in roughly equal energy levels. The term "mixing" is applied to such a rod, because when the mixing rod is used with more than one input fiber cable, the signals on the respective input cables are mixed in the rod before being applied to the output cables. Accordingly, the term "mixing" is somewhat of a misnomer with respect to a coupler that has only one input fiber. However, it has become more or less a standard term in the art and is used herein to apply to both the single and multiple input fiber cases.

Mixing rod couplers of the prior art introduce a number of the aforementioned inadvertent coupling losses which are preferably avoided, if possible, so that the power levels of the signals coupled to the output cables more closely approach the ideal power levels resulting only from the ratio of the number of input lines to the number of output lines. Such inadvertent coupling losses in prior art couplers result from both the losses inherent in each coupling junction between the coupling assembly and the input and output fibers and also from the inefficiency of the optical geometry of such prior art couplers. The geometrical inefficiency of prior art mixing rod couplers results primarily from the use of a cross-sectional area which remains constant throughout the length of the rod. Thus, although output cross section of the prior art mixing rod is optimized for coupling to the output fiber group, the input cross section of the mixing rod is far less than optimum for coupling to the input fiber or fiber group. Accordingly, the purpose of the present invention is to substantially reduce the inadvertent coupling losses of prior art mixing rod couplers by reducing the number of coupling junctions in the coupling assembly interfaced with the input fiber group and also by utilizing a geometrical configuration that is optimized for both the input and output group of fibers.

## SUMMARY OF THE INVENTION

The present invention is a mixing rod coupler in which the constant cross section mixing rod of the prior art is replaced by a mixing rod that is tapered so that its cross section is substantially matched to both the input and output fiber groups. The resulting coupler obviates the inherent area mismatch of

- 4 -

prior art mixing rod couplers and also reduces the number of coupling joints of prior art mixing rod couplers. In addition, the novel geometry of the present invention permits retention of the numerical aperture of the input fiber optic cable that is otherwise reduced in prior art couplers due to inadvertent random refractive bending that usually occurs due to imperfect surfaces at the output coupling junction. The invention is therefore, an improved mixing rod coupler in which inadvertent coupling losses, that is, losses other than those due to the coupling ratio, are substantially reduced as compared to conventional straight mixing rod couplers of the prior art.

The aforementioned disadvantages of the prior art and the manner in which the novel geometrical configuration of the present invention substantially reduces the inadvertent coupling losses resulting from those prior art disadvantages, will be better understood from the detailed description of the invention to follow, taken in conjunction with the accompanying drawings in which:

## BRIEF DESCRIPTION OF THE DRAWINGS

Fig. 1 is an illustrative drawing of a multi-port coupler assembly that employs a straight mixing rod of the prior art;

Fig. 2 is a conceptual illustration of the manner in which an optical signal is coupled in a prior art multi-port coupler employing a straight mixing rod;

Fig. 3 is a conceptual illustration used to explain a significant disadvantage of straight mixing rod couplers that is substantially overcome by means of the present invention;

Fig. 4 is a conceptual illustration of the manner in which an optical signal is coupled by means of the present invention;

Fig. 5 is an illustrative drawing used to explain the manner in which the advantageous coupling characteristics of the present invention are achieved; and

Fig. 6 provides an illustrative example of the manner in which an embodiment of the present invention, suitable for coupling a single input fiber to a group of output fibers, may be manufactured.

## DETAILED DESCRIPTION OF THE INVENTION

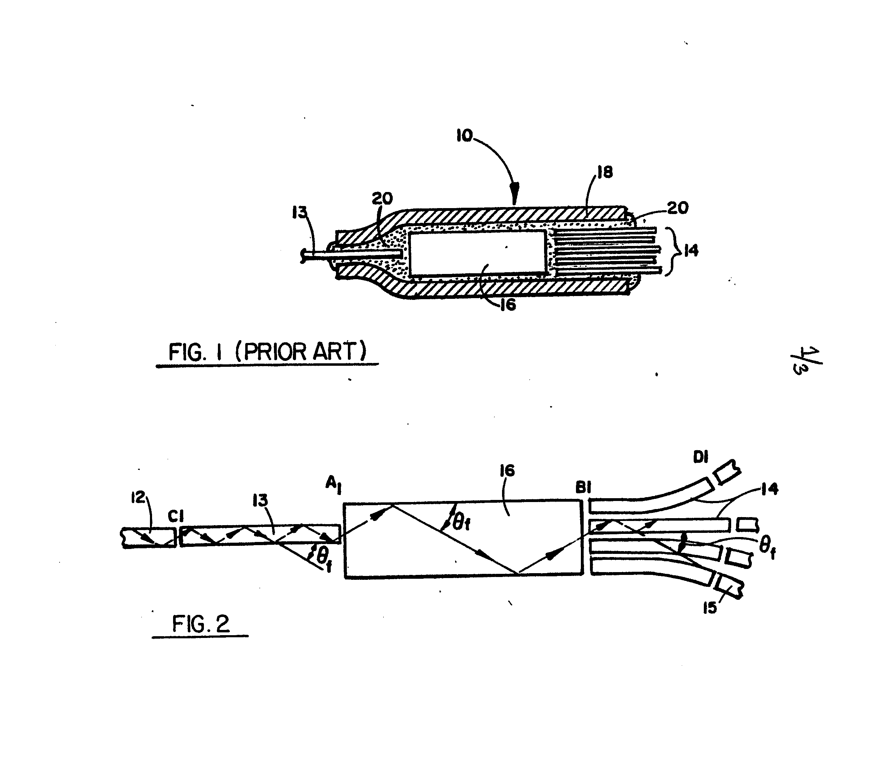

Simply stated, a mixing rod coupler couples the optical output signal of a single fiber or a group of fibers to the input ports of another, usually larger, group of fibers. Fig. 1 illustrates the operation of one such coupler that employs a prior art straight mixing rod. Prior art coupler 10 couples the output signal of a single input fiber 13 to a group of output fibers 14. In other words, light transmission is from left to right in Fig. 1. In addition to the straight mixing rod 16, the coupler also includes a fabrication collar 18 and a suitable optical epoxy 20 which holds the input and output fibers in their respective positions with respect to coupler 10. The optical coupling, per se, is achieved by the straight mixing rod 16. The purpose of the collar 18 is twofold, namely, that of holding the fibers in a close-packed parallel alignment against the mixing rod face and also of providing a protective encapsulation for the finished coupler. It is interesting to note that in the prior art coupler of Fig. 1, the protective collar is tapered to provide improved alignment of the single input fiber 13 with respect to the input face of mixing rod 16. However, the mixing rod itself is straight in that it has substantially parallel straight edges along the longitudinal axis of coupler 10. These straight parallel edges provide optical signal reflections as illustrated conceptually in Fig. 2.

As indicated in Fig. 2, a typical straight mixing rod coupler assembly comprises the mixing rod 16, an input interface fiber 13, and output interface fibers 14. As a result, a first coupling junction C1 exists at the interface between fiber 13 and the system input fiber 12; a second coupling junction A1 exists at the interface between the fiber 13 and the mixing rod 16; a third coupling junction B1 exists at the interface of mixing rod 16 and fibers 14, and a fourth coupling junction D1 exists at the interface between fibers 14 and system output fibers 15.

As shown in Fig. 2, light enters the coupling assembly 10 through the input interface fiber 13 at the left-most portion of the coupler at coupler junction C1. As is well known in the fiber optic art, the light entering the fiber at an angle with respect to the longitudinal axis of the fiber, experiences multiple reflections at the fiber edge or cladding as it passes along the core of the fiber. In the case of a straight mixing rod, the angle of reflection is maintained through the input interface fiber 13, the mixing rod 16 and ultimately, the output interface fibers 14 beyond coupler junction B1. Because of the straight, parallel edges in mixing rod 16, the angle of reflection of the light energy with respect to the edge of the mixing rod, is maintained as a constant angle of reflection $\theta f$ which is typically equal to about 10 degrees.

It is well known that optical fibers are designed with a particular maximum angle with respect to the center line of the fiber at which light rays may enter the fiber and be transferred along the length of the fiber. In a typical fiber, this maximum angle might be, by way of example, 10 degrees, in which case, no light rays can be transmitted in the fiber at an angle $\theta f$ greater than 10 degrees. Any light ray which enters the fiber with an angle greater than this maximum value is lost through the cladding of the fiber by mechanisms which are well known in the art of fiber optics. Thus, this maximum angle is a limit of the angle with respect to the center line of the fiber at which the fiber can accept incoming light and transfer that light with minimum attenuation. The sine of this maximum angle multiplied by the index of refraction of the fiber material, is equal to the numerical aperture, an important operating parameter of fiber optic transmission systems. All of the light which is transmitted in the fiber must be contained within the angles between 0 degrees and the maximum angle related to the numerical aperture of the fiber.

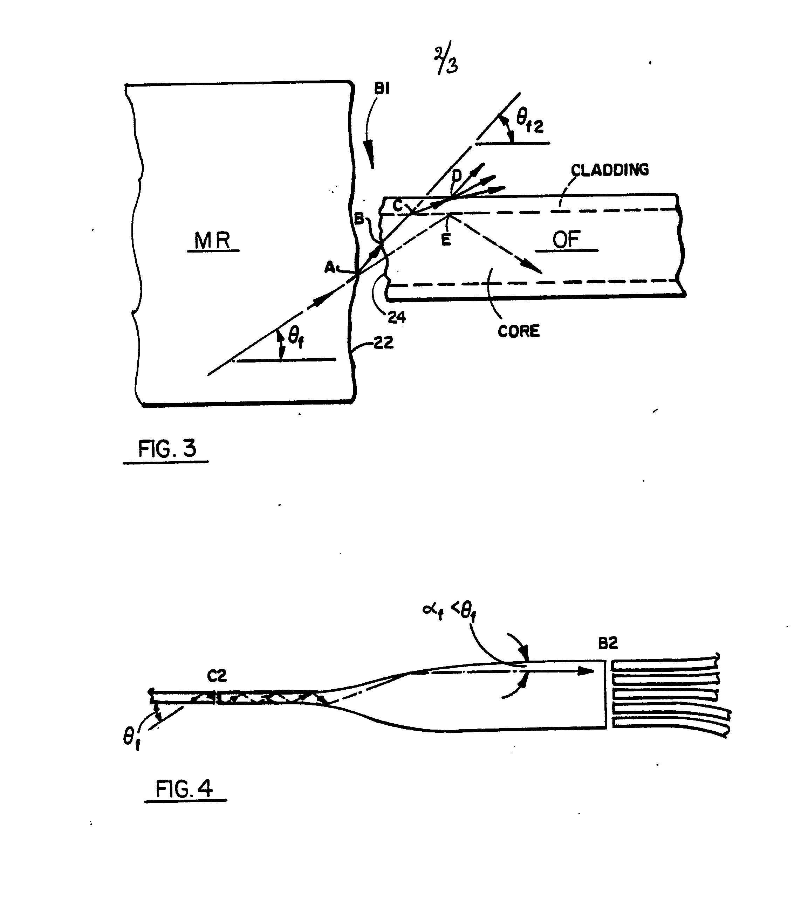

In any optical fiber coupler device, the maximum angle is of great importance. The importance of this angle as it pertains specifically to couplers becomes clear with reference to Fig. 3. Fig. 3 represents the junction between any mixing rod MR and an output fiber OF. It is well known that in no case can the surfaces of the mixing rod MR and output fiber OF, at joint B1, be absolutely flat and perpendicular to the axis of light transmission. This lack of perfect flatness and perpendicularity is exaggerated in Fig. 3 for purposes of discussion. If a light ray exits mixing rod MR at an angle $\theta f$, it passes out of the mixing rod surface at point A through a separating region which may be filled with a contacting material such as optical cement, a contacting liquid, or fusing material. In any case, due to the inevitable lack of perfect index matching between the materials of the mixing rod, the contacting material and the output fiber, there is some refraction at the surface point A and further refraction at the surface point B. Because these surfaces, although they may be generally acceptable, are still not perfect and because these imperfections have random characteristics, the angle of exit of the light ray beyond surface point B may be either larger or smaller than the maximum angle $\theta f$. This exit angle is denoted $\theta f2$ in Fig. 3.

If $\theta_f$ is close to, or equal to the maximum angle as previously defined, $\theta_{f2}$ may be greater than the maximum angle $\theta_f$. Accordingly, when the light reaches the interface surface between the core of the output fiber and the cladding of the output fiber at surface point C, the light will be lost from the core and refracted into the cladding. This light will eventually reach the outer edge of the cladding at surface point D and much of it will be lost by dispersion and various other mechanisms. Light which is reflected back at point D towards the fiber is reflected into the cladding, remains in a cladding mode and is usually lost at other points along the outside cladding surface. Accordingly, instead of having the light that exits the mixing rod at an angle $\theta_f$ passing into the output fiber along the dotted line to point E at the outer surface of the fiber core at the cladding interface and thereafter behaving in the assumed fashion as previously illustrated in Fig. 2, the light is bent because of imperfections in the joint between the output fiber OF and the mixing rod MR and much of the light which is bent is lost from the fibers.

As a result, the attenuation of the coupler to light energy entering at or near the maximum angle is increased. The result is, a substantial reduction in the useable numerical aperture of the fiber transmission system that employs prior art couplers utilizing straight mixing rods. On the other hand, in the present invention the disadvantageous reduction in useable numerical aperture resulting from coupling is substantially overcome. The means by which this is accomplished in the present invention will now be discussed in conjunction with Figs. 4, 5 and 6.

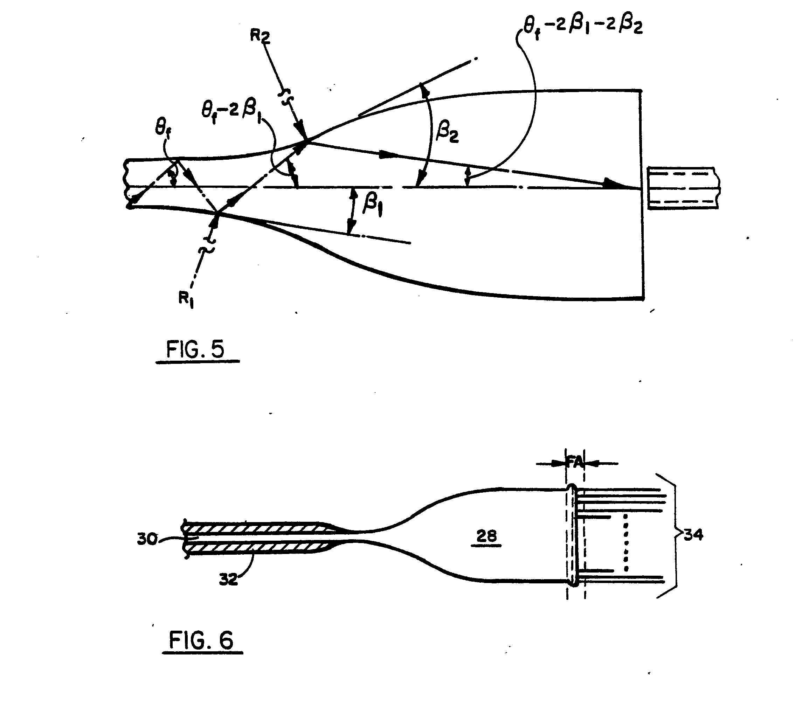

As illustrated in Fig. 4, in the present invention and the straight mixing rod of the prior art is replaced by a tapered mixing rod in which the edges are substantially parallel towards the input and output coupling points, but which are tapered therebetween. This tapering characteristic substantially reduces the angle of the incoming light ray at coupling point C2 from $\theta f$ to $\alpha f$ for the light ray exiting the mixing rod at coupling point B2. Thus, in contrast to the prior art straight mixing rod, in the tapered mixing rod of the present invention, the angle which the light ray makes with the center line or axis of the fiber, reduces its value as the light beam reflects off the tapered surfaces. This reduction process is shown in greater detail in Fig. 5.

In Fig. 5 $\theta f$ is again the maximum angle which a light ray makes with the axis of the input fiber. However, when a reflection occurs at a point in the mixing rod in which tapering has already begun, and wherein the mixing rod has a radius R1 and the tangent line at this point makes an angle $\beta_1$ with respect to the center line of the fiber, the reflected light beam is rotated at an angle $2\beta_1$, so that it then makes an angle $(\theta f - 2\beta_1)$ with respect to the central line of the fiber. Similarly, upon a second reflection at a point further along the mixing rod towards the output fiber, where the radius of the taper is R2, the light beam is rotated by an additional angle $2\beta_2$, where $\beta_2$ is the angle of the tangent line at radius R2 with respect to the center line of the fiber. As a result, the light beam subsequent to this second reflection is at an angle with respect to the center line of the fiber that is equal to $(\theta f - 2\beta_1 - 2\beta_2)$. It is evident that with multiple reflections along the edge of the tapered mixing rod, the angle of the

0013972

light beam is gradually reduced from the original angle θf. Although in Fig. 5 the angles are exaggerated for purposes of discussion and clarity, the length of the mixing rod being considerably foreshortened in comparison to its diameter in Fig. 5, the reflective behavior of the light rays illustrated in Fig. 5 is representative of what actually occurs in the tapered mixing rod of the present invention.

It will now be apparent that as a result of the reduction of the angle of the light ray with respect to the center line axis of the output fiber, the inherent random refractive bending due to surface imperfections at the output of the mixing rod, although still occuring, will not affect or will affect to a lesser degree the useable numerical aperture of the fiber optic transmission line in which the tapered mixing rod of the present invention is utilized in lieu of the straight mixing rod of the prior art. More briefly stated, the maximum bending due to such surface imperfections is less than the reduction of θf provided by the tapered mixing rod. In other words, θf2 of Fig. 3 will usually be less than θf because of the prior reduction of θf before the light ray exits the tapered mixing rod.

An additional advantage of the tapered mixing rod as compared to the prior art straight mixing rod is that because the tapered rod diameter at the input end is substantially equal to the diameter of the input fiber, there is no need for a coupling junction corresponding to Al in Fig. 2 for the prior art straight mixing rod configuration. As a result, there is an improvement in efficiency resulting from the obviation of the reflective and refractive losses that otherwise occur at such an input coupling point.

0013972

Fig. 6 represents a further refinement of the present invention in an embodiment suitable for coupler manufacture. As illustrated in Fig. 6, the tapered coupler 28 has been drawn or pulled into a single input fiber from 30. This pulling or drawing of the input fiber from the mixing rod itself, substantially eliminates losses at the input fiber/mixing rod interface. Additional coupling efficiency is provided by fusing the mixing rod to the output fiber group 34 at a fuse region FA shown in Fig. 6. The single, integral fiber/coupler configuration of Fig. 6 would typically include a cladding 32 on the drawn fiber, however, this cladding would be present, inherently, if the mixing rod itself were also clad. In general, the mixing rod losses are minimized by using a fiber of as large a diameter as the mixing rod from which to draw the input fiber and taper the mixing rod geometry. Although the mixing rod geometry will be a function of the diameter and number of the input and output fibers to which the coupler assembly is designed to be mated, a typical 1 to 7 coupler mixing rod would have an input diameter of 5 mils, an output diameter of 20 mils and an overall length of 3 centimeters of which about 1 cm. is tapered. The mixing rod is usually fabricated of the same material as the fiber being coupled and may have either a graded index or step index cladding.

It will now be apparent that what has been disclosed herein is a multi-port coupler for use in optical fiber transmission lines and which employs a unique mixing rod of novel tapered configuration to produce a highly advantageous improvement in light energy coupling efficiency. This improved efficiency results from a reduction in the number of coupling points and also from the retention of the inherent numerical aperture of the coupled fibers despite random refractive bending that occurs due to imperfections in the surfaces of the coupler. Reduction of the maximum angle of light with respect to the center line axis of transmission in prior art couplers, does not occur in couplers utilizing the present invention because the tapered mixing rod provides gradual reflection angle reduction not provided by straight mixing rods of the prior art.

Although a specific embodiment of the present invention has been disclosed, which embodiment represents the best mode contemplated by the inventors for practicing the invention, it will be apparent to those familiar with the art to which the invention pertains that various modifications and variations may be constructed without departing from the true spirit and scope of the invention. The scope of the invention being defined in the following claims:

- 14 -

CLAIMS

1. An improved apparatus for coupling light energy emanating from the port of at least one input optical transmission line to the respective ports of a plurality of output optical transmission lines, the improvement comprising:

an optical dispersion device intimately positioned between said input transmission line port and said output transmission ports,

said dispersion device having a first portion of cross-sectional area substantially equal to the cross-sectional area of said input transmission line port, having a second portion of cross-sectional area substantially equal to the combined cross-sectional area of said output transmission line ports, and having a third portion of gradually tapered cross section, integrally connecting said first portion to said second portion.

2. The improved coupling apparatus recited in Claim 1, wherein each of said optical transmission lines comprises a fiber optic cable.

3. The improved coupling apparatus recited in Claim 2, wherein said dispersion device is a mixing rod.

4. The improved coupling apparatus recited in Claim 3, wherein said input optical fiber cable is integrally connected to said first portion, having been formed by drawing said first portion into a longitudinally elongated extension thereof.

5. The improved coupling apparatus recited in Claim 4, wherein each of said output optical fibers is integrally connected to said mixing rod, each of said output optical fibers being fused to the third portion of said mixing rod.

6. In an apparatus for coupling light energy emanating from the port of at least one input optical transmission line to the respective ports of a plurality of output optical transmission lines and having an optical dispersion device intimately positioned therebetween, the input optical transmission line having a numerical aperture corresponding to a maximum angle, θf, between the transmitted light and the longitudinal axis of the input optical transmission line; the improvement comprising:

means within said dispersion device for reducing the angle, θ, between the transmitted light and the longitudinal axis of the dispersion device, for light entering said dispersion device at said angle θ and reflecting, at least once, off the outer surface of said dispersion device, where θ is defined as follows:

$$\theta \leq \theta f.$$

7. The improved coupling apparatus recited in Claim 6, wherein each of said optical transmission lines comprises a fiber optic cable.

8. The improved coupling apparatus recited in Claim 7, wherein said dispersion device is a mixing rod.

9. The improved coupling apparatus recited in Claim 8, wherein said input optical fiber cable is integrally connected to said mixing rod having been formed by drawing from said mixing rod a longitudinally elongated extension thereof.

0013972

10. The improved coupling apparatus recited in Claim 9, wherein each of said output optical fibers is integrally connected to said mixing rod, each of said output optical fibers being fused to said mixing rod at the end opposite said elongated extension.

FIG. 1 (PRIOR ART)

1/3

FIG. 2

0013972

²/3

FIG. 3

FIG. 4

FIG. 5

FIG. 6

0013972

EUROPEAN SEARCH REPORT

**European Patent Office**

Application number

EP 80 10 0310

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| X | US - A - 3 901 581 (F.L. THIEL) <br> * claims 1 and 2 * <br> -- | 1-8 | G 02 B 5/14 |
| | US - A - 3 944 327 (H. LARSEN) <br> * fig. 1 * <br> -- | 1 | |
| | US - A - 3 883 222 (L.C. GUNDERSON) <br> * claim 4 * <br> -- | 1 | |
| | US - A - 3 779 628 (F.P. KAPRON et al.) <br> * column 6, lines 1 to 4 * <br> -- | 9 | **TECHNICAL FIELDS SEARCHED (Int.Cl.³)** <br><br> G 02 B 5/14 |
| A | DE - A1 - 2 655 382 (SIEMENS AG) <br> *claim 6 * <br> -- | 9 | |
| A | US - A - 3 832 028 (F.P. KAPRON) <br> * fig. 2 * <br> -- | | |
| A | US - A - 4 083 625 (M.C. HUDSON) <br> * fig. 5 * <br> -- | | **CATEGORY OF CITED DOCUMENTS** |
| A | US - A - 3 610 755 (H. WIEBERGER et al.) <br> * fig. 2 * <br> -- | | X: particularly relevant <br> A: technological background <br> O: non-written disclosure <br> P: intermediate document <br> T: theory or principle underlying the invention <br> E: conflicting application <br> D: document cited in the application <br> L: citation for other reasons |
| | US - A - 3 937 557 (A.F. MILTON) <br> * fig. * <br> ---- | | |
| | | | &: member of the same patent family, corresponding document |

| Place of search | Date of completion of the search | Examiner |
|---|---|---|
| Berlin | 28-04-1980 | FUCHS |

The present search report has been drawn up for all claims

EPO Form 1503.1 06.78